# EUROPEAN PATENT SPECIFICATION

(11) **EP 1 635 496 B1**
(45) Date of publication and mention of the grant of the patent: **05.09.2018**
(21) Application number: 05019680.7
(22) Date of filing: 09.09.2005
(51) Int. Cl.: H04L 1/00, H04W 28/06

(54) **Data communication method based on multi-receiver aggregation**
Datenübertragungsverfahren basierend auf Vielfachempfängersystemzusammensetzung
Procédé de communication de données basé sur l'aggrégation de recépteurs multiples

(30) Priority: 10.09.2004 US 609150 P; 04.01.2005 KR 2005000576
(43) Date of publication of application: 15.03.2006
(73) Proprietor: Samsung Electronics Co., Ltd., Suwon-si, Gyeonggi-do, 443-742 (KR)
(72) Inventor: Jang, Kyung-Hun, Suwon-si Gyeonggi-do (KR); Park, Jong-Ae, Suwon-si Gyeonggi-do (KR); Lee, Dong-Jun, Suwon-si Gyeonggi-do (KR); Chang, Jin-Bong, Suwon-si Gyeonggi-do (KR); Kim, Young-Soo, Suwon-si Gyeonggi-do (KR)
(74) Representative: Grünecker Patent- und Rechtsanwälte PartG mbB

(56) References cited:
- EP-A1- 1 548 990
- WO-A1-03/088604
- WO-A1-2005/112355
- WO-A2-2004/039011
- US-A1- 2003 169 769
- WU J-L C ET AL: "An adaptive multirate IEEE 802.11 wireless lan", INFORMATION NETWORKING, 2001. PROCEEDINGS. 15TH INTERNATIONAL CONFEREN CE ON 31 JANUARY - 2 FEBRUARY 2, PISCATAWAY, NJ, USA,IEEE, 1 January 2001 (2001-01-01), pages 411-418, XP010534303, ISBN: 978-0-7695-0951-8

## Description

The present invention relates to wireless communication systems, and more particularly relates to a data communication method based on packet aggregation that can improve transmission efficiency and minimize power loss in a wireless communication system based on multiple carriers.

Conventional communication systems use a hierarchical frame structure to efficiently transmit high layer data. Specifically, packet aggregation in a media access control (MAC) layer and a physical layer (PHY) is being studied and developed to maximize the efficiency of radio resources of communication systems which conform to wireless communication standards such as the Institute of Electrical & Electronic Engineers (IEEE) 802.11 and 802.16 standards.

WO2005/112355 (published on 24.11.2005) discloses a multiple receiver aggregation (MRA) with different data rates for IEEE 802.11N.

WO2004/039011 discloses a MIMO WLAN system which supports multiple rates and transmission modes which are configurable based on channel conditions and user terminal capabilities. Aggregation schemes include single receiver aggregation (SRA) for aggregating packets destined for a single station (STA) to transmit the aggregated packets in one physical layer (PHY) protocol data unit (PPDU), and multi-receiver aggregation (MRA) for aggregating packets destined for multiple STAs to transmit the aggregated packets in one PPDU.

MRA schemes are classified into an MRA scheme based on a single transmission rate for applying the same transmission rate to packets to be transmitted to different destinations using a single PPDU and an MRA scheme based on multiple transmission rates for applying a transmission rate suitable for packets according to each destination within the PPDU.

A packet aggregation scheme includes an MRA scheme based on a single transmission rate proposed by the task group N synchronization (TGnSync) and a high throughput (HT)-burst scheme proposed by the World Wide Spectrum Efficiency (WWiSE) group as two representative schemes proposed by the IEEE 802.11 TGn standard.

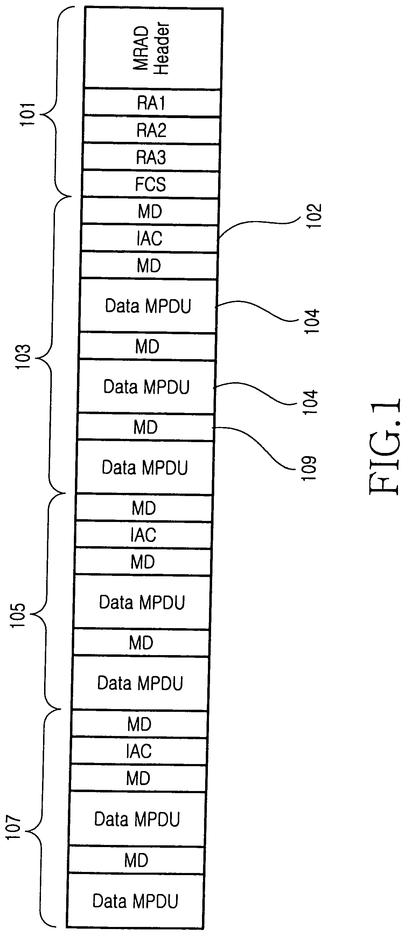

FIG. 1 illustrates the format of an MRA proposed by the TGnSync group. The MRA includes an MRA descriptor MAC protocol data unit (MRAD MPDU) 101 including receiver addresses (RAs), and a plurality of STA-by-STA MPDU groups 103, 105, and 107 each including an initiator aggregate control (IAC) MPDU 102 and data MPDUs 104 to be transmitted to the RAs. The MPDUs 104 are identified by MPDU delimiters (MDs) 109.

The MRAD MPDU 101 includes the RAs of MPDUs included in the MRA. Because a reception STA can determine, in advance (i.e., before reception), if a packet to be received is present in a PPDU, a reduction in reception power can be achieved. However, this MRA scheme is based on the single transmission rate, and must use the lowest transmission rate because all reception STAs must be able to receive the MRA, despite that an optimal transmission rate is available according to the distance between reception STAs or channel characteristics. Therefore, the efficiency of transmission resources is reduced.

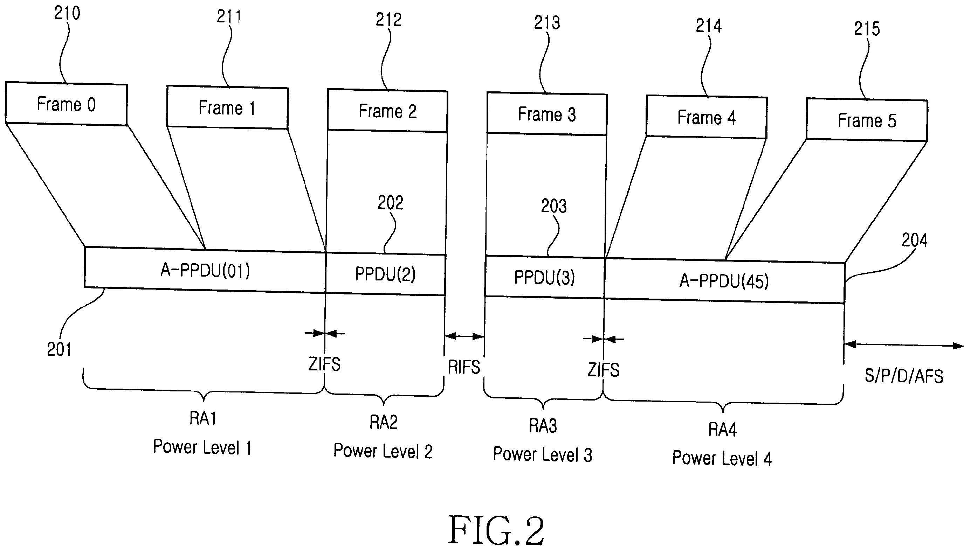

FIG. 2 illustrates the format of conventional high throughput HT-burst proposed by the WWiSE group. In FIG. 2, the HT-burst includes PPDUs or aggregation PPDUs (A-PPDUs) configured by frames on an STA-by-STA basis. In other words, a first PPDU 201 includes Frame #0 210 and Frame #1 211 whose destinations are STA #1), a second PPDU 202 includes Frame #2 212, a third PPDU 203 includes Frame #3 213 and a fourth PPDU 204 includes Frame #4 214 and Frame #5 215.

When successive frames are transmitted at the same power in the conventional HT-burst scheme, the next frame is transmitted on the basis of zero interframe space (ZIFS). When successive frames are transmitted at different power in the HT-burst scheme, the next frame is transmitted on the basis of reduced interframe space (RIFS). Here, the transmission power variation indicates the transmission rate variation. The conventional HT-burst scheme does not take into account reception power reduction and has only an STA-by-STA aggregation effect. As an A-PPDU transmission interval is reduced, a small benefit may be expected. However, a multi-STA aggregation effect is, for the most part, insignificant, in the conventional HT-burst scheme.

Accordingly, the present invention has been designed to solve the above and other problems occurring in the prior art.

It is the object of the present invention to provide a data communication method based on packet aggregation that can efficiently manage resources.

This object is solved by the subject matter of the independent claims.

Preferred embodiments are defined in the dependent claims.

According to one aspect of the present invention, the above is achieved by determining transmission rates for reception stations (STAs) on the basis of channel state information received therefrom, aggregating packets with the same transmission rate to be transmitted to the reception STAs to form a packet group, and transmitting packet groups with different transmission rates using a single multi-rate aggregation (MRA) burst.

It is another aspect of the present invention to provide a data communication method based on packet aggregation that can minimize power consumption required for reception as one or more reception stations (STAs) initiate a reception only mode in a packet group interval including the STAs packets to be received using control information included in a multi-rate aggregation (MRA) burst.

The above and other aspects can be achieved by a communication method in a wireless communication system having transmitters for determining a transmission rate for an associated receiver according to channel state information fed back from associated receivers, and transmitting packets at the determined transmission rate, including grouping packets to be transmitted to the receivers according to transmission rates and generating frames with an identical transmission rate in a transmitter aggregating frames with different transmission rates into a single transmission burst and transmitting the single transmission burst, the transmission burst including a control information frame.

The above and other aspects can also be achieved by a data transmission method in a wireless communication system having transmitters for determining a transmission rate for an associated receiver according to channel state information fed-back from associated receivers, and transmitting packets at the determined transmission rate, including grouping media access control (MAC) protocol data units (MPDUs) to be transmitted to the receivers according to transmission rates and generating aggregation physical layer (PHY) protocol data units (A-PPDUs) configured by MPDUs with an identical transmission rate and aggregating A-PPDUs with different transmission rates into a single multi-rate aggregation (MRA) burst and transmitting the MRA burst.

The above and other aspects can also be achieved by a data reception method in a wireless communication system having transmitters for determining a transmission rate for an associated receiver according to channel state information fed back from associated receivers, and transmitting packets at the determined transmission rate, including when a multi-rate aggregation (MRA) burst descriptor (BD) physical layer (PHY) protocol data unit (PPDU) is received from a transmitter, determining if a receiver's own address is present in the MRA BD PPDU; if the receiver's own address is present, referring to a receiver address (RA) field of the MRA BD PPDU and identifying an aggregation PPDU (A-PPDU) to be received from transmitted A-PPDUs subsequent to the MRA BD PPDU; when the A-PPDU begins to be received, determining if the A-PPDU is an A-PPDU transmitted for the receiver using a preamble and a header of the A-PPDU; if the A-PPDU is an A-PPDU transmitted for the receiver, receiving a total of the A-PPDU; and extracting media access control (MAC) protocol data units (MPDUs) transmitted for the receiver from the received A-PPDU.

The data reception method further including reading a header of the A-PPDU and entering sleep mode until a next A-PPDU begins to be received, if the A-PPDU is not an A-PPDU transmitted for the receiver.

The data reception method further including referring to an MRA burst duration field of the MRA BD PPDU, when the receiver's own address is not present in the MRA BD PPDU, terminating reception mode in a duration of the MRA burst, and entering an off mode.

The aspects and advantages of the present invention will be more clearly understood from the following detailed description taken in conjunction with the accompanying drawings, in which:
FIG. 1 is a diagram illustrating a conventional packet aggregation method;
FIG. 2 is a diagram illustrating another conventional packet aggregation method;
FIG. 3 is a diagram illustrating an example of a packet aggregation communication method according to an embodiment of the present invention;
FIG. 4 is a diagram illustrating a structure of a multi-rate aggregation (MRA) burst descriptor (BD) MAC protocol data unit (MPDU) of FIG. 3; and
FIG. 5 is a diagram illustrating the effect of reducing reception power of a station (STA) in a packet aggregation communication method according to an embodiment of the present invention.

A packet aggregation method according to an embodiment of the present invention will now be described in detail with reference to the accompanying drawings.

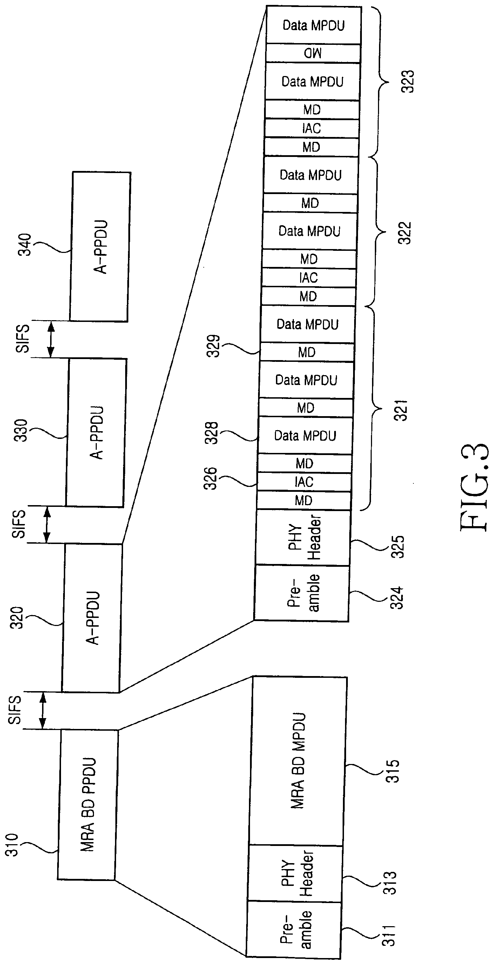

FIG. 3 is a diagram illustrating an example of a packet aggregation communication method in accordance with an embodiment of the present invention.

A multi-rate aggregation (MRA) burst in accordance with an embodiment of the present invention includes an MRA burst descriptor (BD) PHY protocol data unit (PPDU) 310 and three subsequent aggregation PPDUs (A-PPDUs) 320, 330, and 340. The MRA BD PPDU 310 is configured by a preamble 311, a PHY header 313, and an MRA BD MAC protocol data unit (MPDU) 315, and is broadcast at a basic transmission rate.

Before an MRA BD PPDU is transmitted, a transmission station (STA) groups reception STAs according to transmission rates according to a channel state of each reception STA. Then, the transmission STA aggregates packets to be sent to addresses of reception STAs belonging to each group into an MRA PPDU based on a single transmission rate, and configures an A-PPDU.

FIG. 3 illustrates a case where transmission rates for STAs with receiver addresses RA1, RA2 and RA3 are set to 1, transmission rates for STAs with receiver addresses RA4, RA5, and RA6 are set to 2, and transmission rates for STAs with receiver addresses RA7 and RA8 are set to 3, according to channel state information fed back from the reception STAs.

As illustrated in FIG. 3, an MPDU group 321 to be sent to RA1, an MPDU group 322 to be sent to RA2, and an MPDU group 323 to be sent to RA3 associated with the transmission rate of 1 are aggregated into a first A-PPDU 320. Similarly, MPDU groups to be sent to RA4, RA5, and RA6 associated with the transmission rate of 2 are aggregated into a second A-PPDU 330. Similarly, MPDU groups to be sent to RA7 and RA8 associated with the transmission rate of 3 are aggregated into a third A-PPDU 340. Each A-PPDU is generated by inserting a preamble 324 and a physical layer (PHY) header 325 before an MPDU group.

Each MPDU group includes a control MPDU 326 and data MPDUs 328. The MPDUs are delimited by MPDU delimiters 329. A time interval between A-PPDUs uses short interframe space (SIFS) for high-priority media access.

Three A-PPDUs and three MPDU groups have been illustrated in this embodiment. However, the number of A-PPDUs or MPDU groups configuring the MRA burst is not limited to three, but can be changed according to a communication environment.

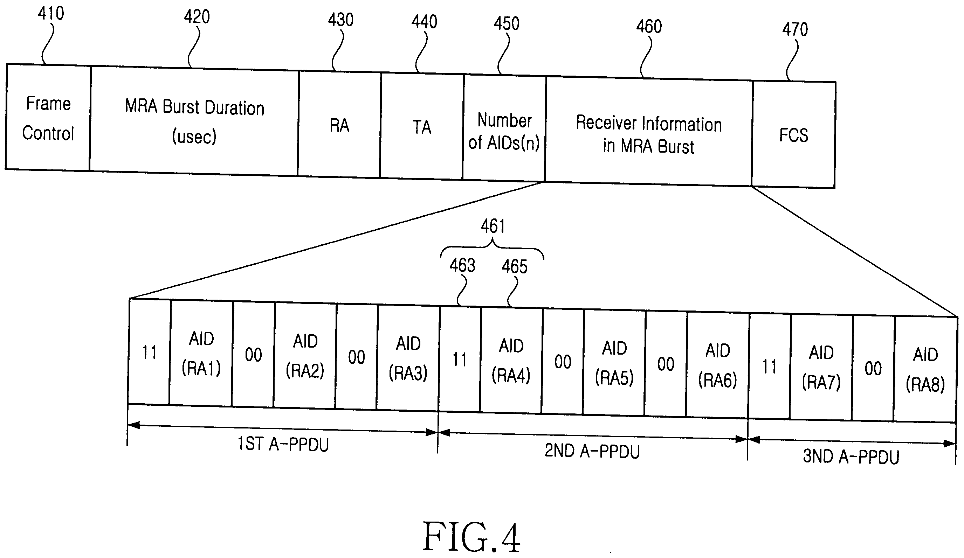

FIG. 4 is a diagram illustrating a structure of the MRA BD MPDU of FIG. 3. The MRA BD MPDU 315 includes a 2-octet frame control field 410 indicating a frame type, a 2-octet MRA burst duration field 420, a 6-octet receiver address (RA) field 430, a 6-octet transmitter address (TA) field 440, a 1-octet "number of association ID (AID) (n)" field 450, a 2n-octet receiver information field 460 in the MRA burst, and a 4-octet frame check sequence (FCS) field 470.

A value of the MRA burst duration field 420 can be used to prevent contention for time-consuming media access of legacy STAs. The receiver information field 460 in the MRA burst includes a plurality of 2-octet AID elements 461. Each AID element 461 includes a 2-bit delimiter 463 and an AID 465. The delimiter 463 can have a value of "11" or "00" (binary). If the delimiter 463 has a value of "11" delimiter 463 indicates that an AID is included in the next A-PPDU, and the value "00" of the delimiter 463 indicates that an AID included in the A-PPDU is the same as an AID of an immediately proceeding PPDU.

A reception method of a reception STA using the above-described MRA burst structure will be described with reference to the accompanying drawings.

First, when an STA receives an MRA BD PPDU 310, it determines if an AID element including the STA's unique AID is present among AID elements enumerated in the receiver information field 460 within the MRA BD MPDU 315 of the MRA BD PPDU 310.

If it is determined that the STA's unique AID is included the STA determines which of the A-PPDUs 320, 330 and 340, which are transmitted subsequent to the MRA BD PPDU 310), includes the STA's MPDUs to be received, using values of delimiters 463 of AID elements 461.

Continuously, when A-PPDUs are received, the STA refers to an A-PPDU preamble 324 and a PHY header 325, and determines if a received A-PPDU includes an MPDU transmitted for the STA. If the received A-PPDU includes an MPDU transmitted for the STA, the STA receives an associated A-PPDU and detects MPDUs.

However, if the A-PPDU does not include an MPDU transmitted for the STA, the STA reads a PHY header and enters sleep mode until the start of the next A-PPDU.

On the other hand, the receiving STA turns off reception power during a time interval indicated by the MRA burst duration field 420 if the STA's AID is not included in the MRA BD PPDU 310.

In case of a legacy STA that cannot detect an MRA burst, reception power can be turned off using a long network allocation vector (NAV) function (or a function for limiting transmission used in the IEEE 802.11 standard) according to a value of the MRA burst duration field 420.

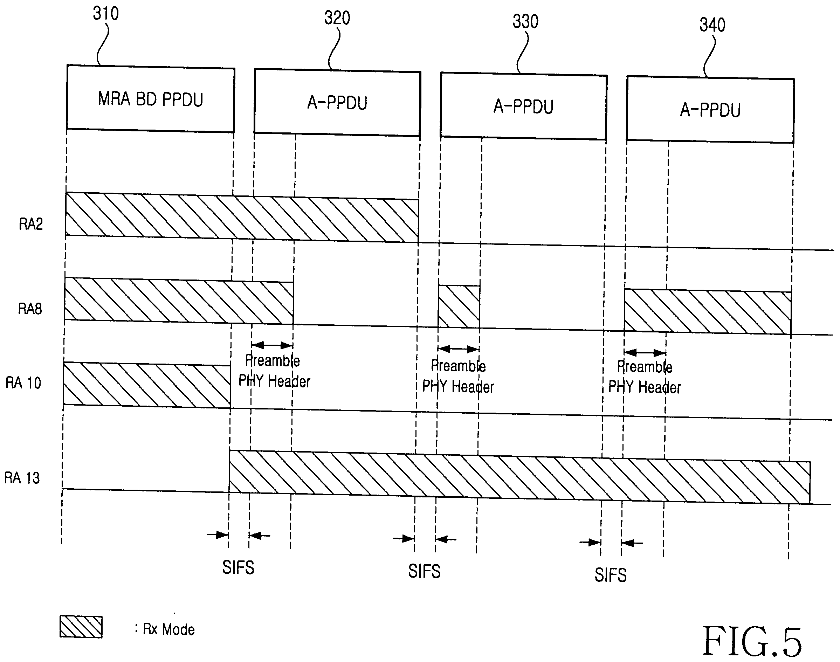

FIG. 5 illustrates the effect of reducing reception power of an STA in a packet aggregation communication method in accordance with an embodiment of the present invention.

Referring to FIGS. 3 to 5, for example, an STA with a receiver address of RA2 determines that its own MPDUs to be received are included in the first A-PPDU 320 using delimiter values of AID elements included in the MRA BD PPDU 310, receives the first A-PPDU 320, detects its own MPDUs, and thereafter enters a sleep mode.

On the other hand, an STA with a receiver address of RA8 determines that its own MPDUs to be received are included in the third A-PPDU 340 using delimiter values of AID elements included in the MRA BD PPDU 310. At the start of reception of the first A-PPDU 320, the STA refers to a preamble and a PHY header of the first A-PPDU, determines that the first A-PPDU is not an A-PPDU transmitted for the STA, and enters the sleep mode until the next A-PPDU arrives. When the first A-PPDU 320 ends, the STA enters reception mode and begins to receive a second A-PPDU 330. At the start of reception of the second A-PPDU 330, the STA refers to a preamble and a PHY header of the second A-PPDU 330, determines that the second A-PPDU 330 is not an A-PPDU transmitted for the STA, and enters the sleep mode until the next A-PPDU arrives. At the start of reception of the third A-PPDU 340, the STA refers to a preamble and a PHY header of the third A-PPDU 340, determines that the third A-PPDU 340 is an A-PPDU transmitted for the STA, and receives the third A-PPDU 340 in its entirety.

Upon receiving an MRA BD PPDU (in its entirety), a third-party high throughput (HT) STA with a receiver address of RA10 enters the sleep mode. As soon as an interval of an MRA BD PPDU ends, a legacy STA with a receiver address of RA13 performs a long NAV function.

The STA with the receiver address of RA2 and the STA with the receiver address of RA8 enter the reception mode during a time interval in which they receive respective A-PPDUs transmitted to them, and enters the sleep modeduring other A-PPDU intervals, such that the consumption of reception power is minimized.

In accordance with the present invention as described above, a data communication method based on packet aggregation can efficiently manage resources by determining transmission rates for reception stations (STAs) on the basis of feedback channel state information in a transmission STA, aggregating packets with the same transmission rate to be transmitted to the reception STAs to form a packet group, and transmitting packet groups with different transmission rates using a single multi-rate aggregation (MRA) burst.

In accordance with the present invention, the data communication method based on packet aggregation can minimize the consumption of reception power as reception STAs enter a reception mode only during a packet group interval including their own packets to be received, using control information included in a multi-rate aggregation (MRA) burst.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims.

## Claims

1. A data transmission method in a wireless communication system, the data transmission method comprising the steps of:
grouping media access control, MAC, protocol data units, MPDUs, (321, 322, 323) to be transmitted to receivers according to transmission rates for the receivers and generating aggregation physical layer, PHY, protocol data units, A-PPDUs, (320, 330, 340) including MPDUs having an identical transmission rate; and
aggregating A-PPDUs (320, 330, 340) with different transmission rates into one multi-rate aggregation, MRA, burst having an MRA burst descriptor (310) including receiver information (315) and sending the MRA burst to the receivers, wherein MPDUs included in each A-PPDU are grouped into a receiver-by-receiver MPDU group and are arranged in a predetermined order, and
wherein the transmission rates are determined according to channel state information fed back from the receivers.

2. The data transmission method of claim 1, wherein the MRA burst descriptor, MRA BD PPDU, (310) includes at least one of a frame control field (410), an MRA burst duration field (420), a receiver address, RA, field (430), a transmitter address, TA, field (440), a 1-octet "number of association ID, AID," field (450), a 2n-octet receiver information field (460) in the MRA burst (where n is an integer), and a frame check sequence, FCS, field (470).

3. The data transmission method of claim 2, wherein the MRA BD PPDU is located at the beginning of the MRA burst and is broadcast using a basic transmission rate.

4. The data transmission method of claim 2, wherein the receiver information field includes RA elements comprising target RAs to which the MPDUs are transmitted.

5. The data transmission method of claim 4, wherein the RA elements are arranged in the same order as MPDUs included in the MRA burst.

6. The data transmission method of claim 5, wherein each RA element includes a delimiter (463) located before an associated RA (465).

7. A data reception method in a wireless communication system, the data reception method comprising the steps of:
receiving a multi-rate aggregation, MRA, burst from a transmitter; and
determining the presence of a unique receiver's address (AID) in the MRA BD PPDU, when a multi-rate aggregation, MRA, burst descriptor, BD, physical layer, PHY, protocol data unit, PPDU, is received in the MRA burst; referring to the receiver's address, RA, field of the MRA BD PPDU and identifying an aggregation PPDU, A-PPDU, to be received from transmitted A-PPDUs subsequent to the MRA BD PPDU, if the receiver's address is present;
determining if the A-PPDU is an A-PPDU transmitted for the receiver using a preamble and a header of the A-PPDU, at the start of reception of the A-PPDU;
receiving the total A-PPDU, if the A-PPDU is an A-PPDU transmitted for the receiver;
and
extracting media access control, MAC, protocol data units, MPDUs, transmitted for the receiver from the received A-PPDU,
wherein MPDUs included in each A-PPDU are grouped into a receiver-by-receiver MPDU group according to transmission rates for the receivers and are arranged in a predetermined order, and
wherein the transmission rates, used by transmitters, are determined according to channel state information fed back from the associated receivers.

8. The data reception method of claim 7, further comprising the steps of:
reading a header of the A-PPDU and entering sleep mode until the start of reception of a next A-PPDU, if the A-PPDU is not an A-PPDU transmitted for the receiver.

9. The data reception method of claim 8, further comprising the steps of:
if it is determined that the receiver's unique address is not present in the MRA BD PPDU:
referring to an MRA burst duration field of the MRA BD PPDU;
terminating reception mode in a duration of the MRA burst; and
entering an off mode.

10. The data reception method of claim 7, wherein the MRA BD PPDU is located at the beginning of the MRA burst and is broadcast using a basic transmission rate.

11. The data reception method of claim 7, wherein the receiver information field includes RA elements comprising target RAs to which the MPDUs are transmitted.

12. The data reception method of claim 7, wherein the RA elements are arranged in the same order as MPDUs included in the MRA burst.

13. The data reception method of claim 7, wherein each RA element includes a delimiter (463) located before an associated RA (465).

## Patentansprüche

1. Datenübertragungsverfahren in einem drahtlosen Kommunikationssystem, wobei das Datenübertragungsverfahren die nachstehenden Schritte umfasst:
Gruppieren von an Empfängern entsprechend den Übertragungsraten für die Empfänger zu übertragende Medienzugriffsteuerungs-Protokolldateneinheiten, MPDUs (321, 322, 323) (MAC-PDUs = Media Access Control-Protocol Data Units = MPDUs), und Erzeugen von Aggregation-Physikalische Schicht-Protokolldateneinheiten, A-PPDUs (320, 330, 340) (Aggregation-Phy-PDUs = Aggregation-Physical layer-Protocol Data Units = A-PPDUs:), die MPDUs mit einer identischen Übertragungsrate einschließen; und
Aggregieren von A-PPDUs (320, 330, 340) mit unterschiedlichen Übertragungsraten in einen Mehrfachratenaggregations-Burst, MRA-Burst (Multi-Rate Aggregation Burst) mit einem MRA-Burstdescriptor (310), der Empfängerinformation (315) einschließt, und Senden des MRA-Bursts an die Empfänger, wobei in jedem A-PPDU eingeschlossene MPDUs in eine Empfänger-für-Empfänger-MPDU-Gruppe gruppiert und in einer vorgegebenen Reihenfolge angeordnet werden; und
wobei die Übertragungsraten gemäß der Kanalzustandsinformation, die von den Empfängern zurückgeliefert wird, ermittelt werden.

2. Datenübertragungsverfahren nach Anspruch 1, wobei die MRA-Burstdescriptor-PPDU (310) (MRA-BD-PPDU) ein Framesteuerfeld (410) und/oder ein MRA-Burstdauer-Feld (420) (MRA-Burst Duration-Feld) und/oder ein Empfängeradressfeld (430) (RA-Feld; RA = Receiver Address) und/oder ein Senderadressfeld (440) (TA-Feld; TA = Transmitter Address) und/oder ein 1-Oktet-"Assoziationszahl-ID"-Feld (450) (AID-Feld = Number of Association ID -Feld) und/oder ein 2n-Oktett-Empfängerinformationsfeld (460) (Receiver Information-Feld) in dem MRA-Burst (worin n eine Ganzzahl ist) und/oder ein Frameprüfsequenzfeld (470) (FCS-Feld = Frame Check Sequence-Feld) einschließt.

3. Datenübertragungsverfahren nach Anspruch 2, wobei die MRA-BD-PPDU am Anfang des MRA-Bursts liegt und unter Verwendung einer Basisübertragungsrate gesendet wird.

4. Datenübertragungsverfahren nach Anspruch 2, wobei das Empfängerinformationsfeld RA-Elemente einschließt, die Ziel-RAs umfassen, an die die MPDUs übertragen werden.

5. Datenübertragungsverfahren nach Anspruch 4, wobei die RA-Elemente in der gleichen Reihenfolge wie in dem MRA-Burst eingeschlossene MPDUs angeordnet sind.

6. Datenübertragungsverfahren nach Anspruch 5, wobei jedes RA-Element einen Begrenzer (463) einschließt, der vor einem assoziierten RA (465) liegt.

7. Datenempfangsverfahren in einem drahtlosen Kommunikationssystem, wobei das Datenempfangsverfahren die nachstehenden Schritte umfasst:
Empfangen eines Mehrfachratenaggregations-Bursts (MRA-Burst) von einem Sender; und
Ermitteln der Anwesenheit einer eindeutigen Empfängeradresse (AID) in der MRA-BD-PPDU, wenn eine Mehrfachratenaggregation-Burstdescriptor-Physikalische Schicht-Datenprotokolleinheit, PPDU (MRA-BD-PHY-PDU = Multi-Rate Aggregation-Burst Descriptor-Physical layer-Protocol Data Unit = PPDU), in dem MRA-Burst empfangen wird;
Bezugnahme auf das Empfängeradressfeld (RA-Feld) der MRA-BD-PPDU und Identifizieren einer von den übertragenen A-PPDUs zu empfangenden, auf die MRA-BD-PPDU folgenden Aggregations-PPDU, (A-PPDU), wenn die Empfängeradresse vorhanden ist;
Ermitteln, unter Verwendung einer Präampel und eines Headers der A-PPDU, ob die A-PPDU eine für den Empfänger übertragene A-PPDU ist, am Beginn des Empfangs der A-PPDU;
Empfangen der gesamten A-PPDU, wenn die A-PPDU eine für den Empfänger übertragene A-PPDU ist; und
Extrahieren von für den Empfänger von der empfangenen A-PPDU übertragenen Medienzugriffssteuerungs-Protokolldateneinheiten, MPDUs (MAC-PDU = MPDU),
wobei in jeder A-PPDU eingeschlossene MPDUs entsprechend den Übertragungsraten für die Empfänger in eine Empfänger-für-Empfänger-MPDU-Gruppe gruppiert und in einer vorgegebenen Reihenfolge angeordnet werden, und
wobei die durch die Sender verwendeten Übertragungsraten entsprechend der Kanalzustandsinformation, die von den assoziierten Empfängern zurückgeliefert wird, ermittelt werden.

8. Datenempfangsverfahren nach Anspruch 7, das des Weiteren die nachstehenden Schritte umfasst:
Lesen eines Headers der A-PPDU und Eintreten in den Sleep-Modus bis zum Beginn des Empfangs einer nächsten A-PPDU, wenn die A-PPDU keine für den Empfänger übertragene A-PPDU ist.

9. Datenempfangsverfahren nach Anspruch 8, das des Weiteren die nachstehenden Schritte umfasst:
wenn festgestellt wird, dass die eindeutige Empfängeradresse in dem MRA-BD-PPDU nicht vorhanden ist:
Bezugnahme auf ein MRA-Burstdauer-Feld des MRA-BD-PPDU;
Beenden des Empfangsmodus während der Dauer des MRA-Bursts; und
Eintreten in den Aus-Modus.

10. Datenempfangsverfahren nach Anspruch 7, wobei die MRA-BD-PPDU am Anfang des MRA-Bursts liegt und unter Anwendung einer Basisübertragungsrate gesendet wird.

11. Datenempfangsverfahren nach Anspruch 7, wobei das Empfängerinformationsfeld RA-Elemente einschließt, die Ziel-RAs umfassen, an die die MPDUs übertragen werden.

12. Datenempfangsverfahren nach Anspruch 7, wobei die RA-Elemente in der gleichen Reihenfolge wie in dem MRA-Burst eingeschlossene MPDUs angeordnet sind.

13. Datenempfangsverfahren nach Anspruch 7, wobei jedes RA-Element einen Begrenzer (463), der vor einem assoziierten RA (465) liegt, einschließt.

## Revendications

1. Procédé de transmission de données dans un système de communication sans fil, le procédé de transmission de données comprenant les étapes suivantes:
regrouper des unités de données de protocole, MPDU, de contrôle d'accès au support, MAC (321, 322, 323) à transmettre aux récepteurs en fonction des débits de transmission pour les récepteurs et générer des unités de données de protocole, A-PPDU d'une couche physique d'agrégation, PHY (320, 330, 340) comprenant des unités MPDU ayant un débit de transmission identique; et
agréger les unités A-PPDU (320, 330, 340) avec des débits de transmission différents en une rafale d'agrégation multi-débit, MRA, ayant un descripteur de rafale MRA (310) comprenant des informations de réception (315) et envoyer la rafale MRA aux récepteurs,
dans lequel les unités MPDU incluses dans chaque A-PPDU sont groupées dans un groupe MPDU récepteur par récepteur et sont disposées dans un ordre prédéterminé, et
dans lequel les débits de transmission sont déterminés en fonction des informations d'état de canal renvoyées par les récepteurs.

2. Procédé de transmission de données selon la revendication 1, dans lequel le descripteur de rafale MRA, MRA BD PPDU, (310) comprend au moins un champ de contrôle de trame (410), un champ de durée de rafale MRA (420), une champ d'adresse de récepteur, RA (430), un champ d'adresse d'émetteur, TA (440), un champ d'identifiant de destinataire d'un octet "ID de numéro d'association, AID" (450), un champ d'information de réception de 2n-octets (460) dans la rafale MRA (où n est un entier) et un champ de séquence de contrôle de trame, FCS (470).

3. Procédé de transmission de données selon la revendication 2, dans lequel l'unité MRA BD PPDU est située au début de la rafale MRA et est diffusée au moyen d'un débit de transmission de base.

4. Procédé de transmission de données selon la revendication 2, dans lequel le champ d'information de récepteur comprend des éléments RA comprenant des RA cibles auxquels les MPDU sont transmises.

5. Procédé de transmission de données selon la revendication 4, dans lequel les éléments RA sont agencés dans le même ordre que les MPDU incluses dans la rafale MRA.

6. Procédé de transmission de données selon la revendication 5, dans lequel chaque élément RA comprend un délimiteur (463) situé avant une RA associée (465).

7. Procédé de réception de données dans un système de communication sans fil, le procédé de réception de données comprenant les étapes suivantes:
recevoir une rafale d'agrégation multi-débit, MRA, d'un émetteur; et déterminer la présence de l'adresse de récepteur unique (AID) dans la MRA BD PPDU, en cas de réception d'une unité de données de protocole, PPDU, de couche physique, PHY, de descripteur de rafale, BD, d'agrégation multi-débit, MRQ, dans la rafale MRA;
renvoyer au champ d'adresse du destinataire, RA, de l'unité MRA BD PPDU et identifier une PPDU d'agrégation, A-PPDU, à recevoir des unités A-PPDU émises après l'unité MRA BD PPDU, si l'adresse du destinataire est présente;
déterminer si l'A-PPDU est une unité A-PPDU transmise pour le récepteur en utilisant un préambule et un en-tête de l'unité A-PPDU, au début de la réception de l'A-PPDU;
recevoir l'unité A-PPDU totale, si l'unité A-PPDU est une A-PPDU transmise au récepteur; et
extraire les unités de données de protocole, MPDU, de contrôle d'accès au support, MAC, transmises pour le récepteur à partir de l'unité A-PPDU reçue,
dans lequel les unités MPDU incluses dans chaque A-PPDU sont groupées dans un groupe MPDU récepteur par récepteur selon les débits de transmission pour les récepteurs et sont disposées dans un ordre prédéterminé, et
dans lequel les débits de transmission, utilisés par les émetteurs, sont déterminés en fonction des informations d'état de canal renvoyées par les récepteurs associés.

8. Procédé de réception de données selon la revendication 7, comprenant en outre les étapes suivantes:
lire un en-tête de l'unité A-PPDU et passer en mode veille jusqu'au début de la réception d'une unité A-PPDU suivante, si l'unité A-PPDU n'est pas une unité A-PPDU transmise au récepteur.

9. Procédé de réception de données selon la revendication 8, comprenant en outre les étapes suivantes:
si l'on est détermine que l'adresse unique du récepteur n'est pas présente dans la MRA BD PPDU:
renvoyer à un champ de durée de rafale MRA de la MRA BD PPDU; terminer le mode de réception dans une durée de la salve MRA; et
passer en mode arrêt.

10. Procédé de réception de données selon la revendication 7, dans lequel l'unité MRA BD PPDU est située au début de la rafale MRA et est diffusée au moyen d'un débit de transmission de base.

11. Procédé de réception de données selon la revendication 7, dans lequel le champ d'information de récepteur comprend des éléments RA comprenant des RA cibles auxquels les MPDU sont transmises.

12. Procédé de réception de données selon la revendication 7, dans lequel les éléments RA sont agencés dans le même ordre que les MPDU incluses dans la rafale MRA.

13. Procédé de réception de données selon la revendication 7, dans lequel chaque élément RA comprend un délimiteur (463) situé avant une RA associée (465).
